# EUROPÄISCHE PATENTANMELDUNG

(11) **EP 4 360 971 A1**
(43) Veröffentlichungstag der Anmeldung: **01.05.2024**
(21) Anmeldenummer: 23200080.2
(22) Anmeldetag: 27.09.2023
(51) Int. Cl.: B60T 13/66, B60T 8/17, B60T 8/32, B60T 13/68, B60T 17/22

(54) **ÜBERPRÜFUNG EINES IST-DRUCKSENSORS EINES KRAFTFAHRZEUG-BREMSSYSTEMS**

(30) Priorität: 28.10.2022 DE 102022211503
(71) Anmelder: ZF CV Systems Global GmbH, 3006 Bern (CH)
(72) Erfinder: Brutt, Mirko, 31832 Springe (DE); Kemmerling, Matthias, 38110 Braunschweig (DE); Hauschild, Tobias, 30926 Seelze (DE); Laskawy, Ivo, 21149 Hamburg (DE)
(74) Vertreter: ZF Friedrichshafen AG

(57) **Zusammenfassung**

Die Erfindung betrifft ein Verfahren zur Überprüfung eines Ist-Drucksensors (13) eines Kraftfahrzeug-Bremssystems (8). Das Verfahren umfasst insbesondere die folgenden Verfahrensschritte:
(100): Festlegen einer zeitlichen Länge eines Reaktionsintervalls (Δt),
(200): Festlegen eines Grenzwertdrucks (pₘᵢₙ),
(300): Betreiben eines Kraftfahrzeug-Bremssystems (8) eines Kraftfahrzeugs (1) in einem elektronischen Bremsmodus, wobei das Kraftfahrzeug-Bremssystem (8) einem Anhänger (2), der mit dem Kraftfahrzeug (1) verbundenen ist, einen Bremsdruck (pₐᵤₛ) bereitstellt, sodass ein Anhänger-Bremssystem (7) des Anhängers (2) mittels des Bremsdrucks (pₐᵤₛ) betätigt werden kann,
(400): Starten des Reaktionsintervalls (Δt) zu Beginn des Bremsvorgangs und Messen pneumatischer Ist-Bremsdruckwerte (pᵢₛₜ) mittels eines Ist-Drucksensors (13), wobei ein Start-Bremsdruck (pₛₜₐᵣₜ) des Kraftfahrzeug-Bremssystems (8) mittels des Ist-Drucksensors (13) zu Beginn eines Bremsvorgangs gemessen wird, der in dem elektronischen Bremsmodus für den Anhänger (2) durchgeführt wird,
(500): Messen pneumatischer Reaktions-Bremsdrücke (pᵣₑ; pᵣₑ₁, pᵣₑ₂, pᵣₑ₃) innerhalb des Reaktionsintervalls (Δt) mittels des Ist-Drucksensors (13),
(600): Überprüfen, ob die Reaktions-Bremsdrücke (pᵣₑ; pᵣₑ₁, pᵣₑ₂, pᵣₑ₃) den Grenzwertdruck (pₘᵢₙ) überschreiten, wobei
(600a) der Betrieb des Kraftfahrzeug-Bremssystems (8) in dem elektronischen Betriebsmodus fortgeführt wird, wenn zumindest ein gemessener Reaktions-Bremsdruck (pᵣₑ₃) den Grenzwertdruck (pₘᵢₙ) überschreitet, und
(600b) der Betrieb des Kraftfahrzeug-Bremssystems (8) in dem elektronischen Betriebsmodus abgebrochen wird, wenn keiner der gemessenen Reaktions-Bremsdrücke (pᵣₑ) den Grenzwertdruck (pₘᵢₙ) überschreitet.

## Beschreibung

Die Erfindung betrifft die Überprüfung eines Ist-Drucksensors eines Kraftfahrzeug-Bremssystems.

Die Erfindung betrifft insbesondere sogenannte Off-Highway-Fahrzeuge wie z.B. landwirtschaftliche Traktoren, die ein Kraftfahrzeug-Bremssystem mit einem elektronischen Anhängersteuerungssystem aufweisen. Um ein derartiges Anhängersteuerungssystem mit möglichst wenig Sensoren bereitstellen zu können, wird die korrekte Funktion des elektronischen Anhängersteuerungssystems typischerweise durch Plausibilitätsprüfungen verifiziert. Insbesondere bei Sensoren, die dauerhaft einen Druck von 0 bar messen, ist es für das elektronische Anhängersteuerungssystem jedoch schwierig, dies zu erkennen und die korrekte Funktion des elektronischen Anhängersteuerungssystems aufrechtzuerhalten. So wird, wenn ein gewünschter Betriebsbremsdruck kleiner als 1 bar ist und ein Ist-Drucksensor einen Ist-Bremsdruckwert von 0 bar misst, die Abweichung zwischen dem gewünschten Betriebsbremsdruck und dem tatsächlich gemessenen Wert kleiner als 1 bar sein. Problematisch ist nun die natürliche Reaktion der Regelung: Da der gemessene Ist-Bremsdruckwert 0 bar beträgt, wird typischerweise über ein Öffnen eines Einlassventils eines Anhängersteuerventils versucht, den Sollwert zu erreichen. Da der Ist-Drucksensor jedoch ständig 0 bar anzeigt, wird auch das Einlassventil ständig geöffnet. Dies führt zu einem plötzlichen Anstieg des Bremsdrucks und einer unerwünschten Vollbremsung, obwohl der Solldruck einen Wert annimmt, der unterhalb von 1 bar liegt.

Eine Aufgabe der vorliegenden Erfindung kann darin gesehen werden, die Regelung eines Kraftfahrzeug-Bremssystems mit einem elektronischen Anhängersteuerungssystem dahingehend zu verbessern, dass insbesondere Vollbremsungen bei einem nicht korrekt messenden Ist-Drucksensor verhindert werden. Die Aufgabe wird gelöst durch die Gegenstände der unabhängigen Patentansprüche. Vorteilhafte Ausführungsformen sind Gegenstand der Unteransprüche, der folgenden Beschreibung sowie der Figuren.

Gemäß der vorliegenden Erfindung wird eine Plausibilitätsprüfung zur Erkennung einer Fehlfunktion eines Ausgangsdrucksensors (Im Folgenden: Ist-Drucksensor) vorgeschlagen. Die Erfindung beschreibt dabei eine spezielle Plausibilitätsprüfung zur frühzeitigen Erkennung einer Fehlfunktion des Ist-Drucksensors. Die beschriebene Plausibilitätsprüfung bezieht sich auf einen Sensor- oder Systemdefekt, der zu einem Druckmesswert von 0 bar an dem Ist-Drucksensor führt. Die Idee besteht nun darin, bei jedem Beginn einer Bremsung, die über einen elektronischen Anhängerbremsmodus ausgeführt wird, eine speziell entwickelte Plausibilitätsprüfung zu starten. In dem elektronischen Bremsmodus erfolgt das Bremsen des Kraftfahrzeugs und im vorliegenden Fall auch das Bremsen des Anhängers nur indirekt, wodurch eine weitreichende elektronische Regelung der Bremsleistung über Fahrerassistenzsysteme wie ein Antiblockiersystem oder eine Anfahrregelung ermöglicht wird. Insbesondere ermöglicht diese elektronische Regelung eine genaue Einstellung der Bremsleistung, um eine jeweils situationsangepasste effektive Abbremsung des Kraftfahrzeugs zu erreichen. Die mittels des Ist-Drucksensors gemessenen Ist-Bremsdruckwerte sind dabei eine wichtige Eingangsgröße für die weitere Regelung des Kraftfahrzeug-Bremssystems. Die Plausibilitätsprüfung soll bestätigen, ob ein Mindestausgangsdruck an dem Ist-Drucksensor insbesondere als Ergebnis mehrerer Einlassventilbetätigungen innerhalb einer vordefinierten Zeit erreicht wird. Wird der Mindestausgangsdruck nicht innerhalb der vordefinierten Zeit erreicht, schaltet das System automatisch die elektronische Anhängerbremssteuerung ab und kann insbesondere in einen mechanischen Redundanzmodus übergehen, um die oben beschriebene Überbremsung des Anhängers zu vermeiden.

In diesem Sinne wird gemäß einem ersten Aspekt der Erfindung ein Verfahren zur Überprüfung eines Ist-Drucksensors eines Kraftfahrzeug-Bremssystems bereitgestellt. Das Verfahren umfasst insbesondere die folgenden Verfahrensschritte.
(100): Festlegen einer zeitlichen Länge eines Reaktionsintervalls,
(200): Festlegen eines Grenzwertdrucks, insbesondere eines pneumatischen oder eines hydraulischen Grenzwertdrucks,
(300): Betreiben eines Kraftfahrzeug-Bremssystems eines Kraftfahrzeugs in einem elektronischen Bremsmodus, wobei das Kraftfahrzeug-Bremssystem einem Anhänger, der mit dem Kraftfahrzeug verbundenen ist, einen Bremsdruck bereitstellt (insbesondere einen pneumatischen oder einen hydraulischen Bremsdruck), sodass ein Anhänger-Bremssystem des Anhängers mittels des Bremsdrucks betätigt werden kann,
(400): Starten des Reaktionsintervalls zu Beginn des Bremsvorgangs und Messen von Ist-Bremsdruckwerten (insbesondere von pneumatischen oder hydraulischen Ist-Bremsdruckwerten) mittels eines Ist-Drucksensors, wobei ein Start-Bremsdruck des Kraftfahrzeug-Bremssystems mittels des Ist-Drucksensors zu Beginn eines Bremsvorgangs gemessen wird, der in dem elektronischen Bremsmodus für den Anhänger durchgeführt wird,
(500): Messen von Reaktions-Bremsdrücken, insbesondere von pneumatischen oder hydraulischen Reaktions-Bremsdrücken, innerhalb des Reaktionsintervalls mittels des Ist-Drucksensors,
(600): Überprüfen, ob die Reaktions-Bremsdrücke den Grenzwertdruck überschreiten, wobei
   (600a) der Betrieb des Kraftfahrzeug-Bremssystems in dem elektronischen Betriebsmodus fortgeführt wird, wenn zumindest ein gemessener Reaktions-Bremsdruck den Grenzwertdruck überschreitet, und
   (600b) der Betrieb des Kraftfahrzeug-Bremssystems in dem elektronischen Betriebsmodus abgebrochen wird, wenn keiner der gemessenen Reaktions-Bremsdrücke den Grenzwertdruck überschreitet.

Das erfindungsgemäße Verfahren zeichnet sich insbesondere dadurch aus, dass kein zusätzlicher Ist-Drucksensor zur Plausibilisierung notwendig ist. Weiterhin erkennt bzw. bemerkt der Fahrer des Kraftfahrzeugs die Plausibilisierung nicht, da sie im Hintergrund abläuft. Ferner wird eine frühzeitige Erkennung eines Fehlers zur Einleitung der Systemreaktion ermöglicht, sodass eine unbeabsichtigte Vollbremsung verhindert wird, insbesondere einschließlich einer Warnung des Fahrers.

Die Verfahrensschritte (400) bis (600) können bei jedem Bremsvorgang durchgeführt werden, der initiiert wird, wenn das Kraftfahrzeug-Bremssystem in dem elektronischen Bremsmodus betrieben wird. Dadurch kann ein besonders hoher Sicherheitsstandard erreicht werden. Andererseits kann Rechenzeit gespart werden, indem insbesondere die Verfahrensschritte (500) und (600) nur dann durchgeführt werden, wenn in dem Verfahrensschritt (400) der Wert 0 bar als Start-Bremsdruck gemessen wird. Alternativ kann vorgesehen sein, dass die Verfahrensschritte (500) und (600) nur dann durchgeführt werden, wenn in dem Verfahrensschritt (400) ein Start-Bremsdruck gemessen wird, der zwischen 0 bar und dem festgelegten Grenzwertdruck liegt.

Für den insbesondere pneumatischen oder hydraulischen Bremsdruck wird gemäß einer Ausführungsform ein Soll-Wert festgelegt, der nicht höher als 1 bar ist, wobei der Bremsdruck basierend auf dem festgelegten Soll-Wert für den Bremsdruck und basierend auf den von dem Ist-Drucksensor gemessenen Ist-Bremsdruckwerten geregelt wird. Somit kann das erfindungsgemäße Verfahren insbesondere für sanfte Bremsanforderungen eingesetzt werden, für die aus dem Stand der Technik bisher noch keine Prüfung bekannt war. Der Grenzwertdruck kann dabei insbesondere auf einen Wert festgelegt werden, der zwischen 0 bar und dem Soll-Wert des Bremsdrucks liegt. Das Reaktionsintervall kann beispielsweise auf eine zeitliche Länge festgelegt werden, die zwischen 50 Millisekunden und 300 Millisekunden liegt.

Das Kraftfahrzeug-Bremssystem kann ein insbesondere elektro-pneumatisches Anhängersteuerventil mit einem Einlassventil aufweisen. Mittels des Einlassventils kann der Ausgabedruck des Kraftfahrzeug-Bremssystems geregelt werden, indem das Einlassventil in einen geöffneten Zustand versetzt wird, um den Ausgabedruck zu steigern. In diesem Zusammenhang kann man von einem Impuls zur Steigerung des Ausgangsdrucks bzw. des pneumatischer Bremsdruck sprechen. Das Einlassventil kann auch wieder in einen geschlossenen Zustand versetzt werden, um einen Anstieg des Ausgabedrucks zu verhindern oder zumindest zu reduzieren. Durch einen Öffnungsgrad des Einlassventils kann die Intensität des Druckanstiegs weiter variiert werden. So wird eine weitere Öffnung des Einlassventils in der Regel zu einem höheren Druckanstieg führen als eine engere Öffnung. Das Einlassventil kann insbesondere mehrmals hintereinander innerhalb des Reaktionsintervalls in den geöffneten und in den geschlossenen Zustand versetzt werden. Gemäß einer Ausführungsform ist in diesem Sinne vorgesehen, dass das Einlassventil innerhalb des Reaktionsintervalls wenigstens einmal in einen geöffneten Zustand versetzt wird, um den Bremsdruck des Kraftfahrzeug-Bremssystems derart zu erhöhen, dass die gemessenen Reaktions-Bremsdrücke den Grenzwertdruck überschreiten. Dabei kann das Anhängersteuerventil von einer elektronischen Steuerungseinheit entsprechend angewiesen werden. Das Einlassventil kann auch derart geöffnet werden, dass nicht lediglich der Grenzwertdruck überschritten wird, sondern stattdessen ein für den Bremsvorgang angeforderter bzw. gewünschter Betriebsbremsdruck.

Die Druckregelung kann insbesondere derart erfolgen, dass der pneumatische Bremsdruck "vorsichtig" auf einen gewünschten Betriebsbremsdruck unterhalb von 1 bar angehoben wird, z.B. auf 0,5 bar, ohne diesen Sollwert zu überschreiten. Dazu kann das Einlassventil beispielsweise nicht vollständig geöffnet werden, sondern lediglich teilweise. Diese vorsichtige Druckregelung könnte dazu führen, dass der minimale pneumatische Druck nicht innerhalb des Reaktionsintervalls überschreiten wird und der Test fehlschlägt, da die Regelung zu langsam ist. Um dem entgegenzuwirken wird die Druckregelung derart eingestellt, dass ein anfänglicher Öffnungsimpuls des Einlassventils des Anhängersteuerventils künstlich verlängert wird, um die Reaktionsdrücke zu zwingen, einen bestimmten Wert, insbesondere den pneumatischer Grenzwertdruck schneller zu erreichen. In diesem Sinne ist gemäß einer Ausführungsform vorgesehen, dass das Einlassventil innerhalb des Reaktionsintervalls mehrmals in einen geöffneten Zustand versetzt wird, wobei das Einlassventil, wenn es das erste Mal in den geöffneten Zustand versetzt wird, für einen längeren Zeitraum geöffnet bleibt, als wenn es nach dem ersten Mal erneut in den geöffneten Zustand versetzt wird. Dies führt zu Beginn des Reaktionsintervalls zu einer sehr kleinen Druckspitze in dem zeitlichen Verlauf des pneumatischen Bremsdrucks. Diese Druckspitze ist klein genug, um nicht über den gewünschter Betriebsbremsdruck hinauszuschießen. Stattdessen signalisiert die Druckspitze der Steuergerätesoftware innerhalb des Reaktionsintervalls, dass der Ist-Drucksensor nicht bei 0 bar hängen bleibt, sondern in der Lage ist, richtige Werte zu liefern.

Weiterhin ist es möglich, den Diagnoseumfang noch zu erhöhen. Die oben beschriebene Plausibilisierung wird während einer Bremsanforderung des Fahrers durchgeführt. Dies führt zu einem hohen Diagnosedeckungsgrad, erkennt aber eine System-oder Sensorfehlfunktion erst zu Beginn des Bremsvorgangs. Um den Fahrer auf eine verminderte Leistung aufmerksam zu machen, könnte es hilfreich sein, die Sensorleistung bereits vor der Bremsung zu überprüfen. Da die erwähnten Druckspitzen sehr klein sein können (z. B. ~ 100 mbar), ist es möglich, einen einzelnen hohen Einlassventilimpuls auch dann auszulösen, wenn keine Bremsanforderung vorliegt. In diesem Sinne ist gemäß einer Ausführungsform vorgesehen, dass das Einlassventil einmal in einen geöffneten Zustand versetzt wird, während kein Bremsvorgang durchgeführt wird, sodass eine Druckspitze in dem zeitlichen Verlauf des Bremsdrucks auftritt, während kein Bremsvorgang durchgeführt wird.

Auf den Einlassventilimpuls kann insbesondere ein Auslassventilimpuls folgen, sodass dieser kurze Druckanstieg keinerlei Auswirkung auf den Bremsdruck des Anhängers hat, aber es dennoch möglich ist, einen Wert am eigentlichen Drucksensor zu sehen. In diesem Fall kann der Sensor als "OK" markiert werden und das System bleibt im Normalbetrieb. In diesem Sinne ist gemäß einer Ausführungsform vorgesehen, dass das insbesondere elektro-pneumatische Anhängersteuerventil ein Auslassventil aufweist, wobei das Einlassventil in einen geschlossenen Zustand versetzt wird, nachdem es zuvor einmal in den geöffneten Zustand versetzt worden ist, und das Auslassventil anschließend einmal in einen geöffneten Zustand versetzt wird, während kein Bremsvorgang durchgeführt wird, sodass der Druckspitze entgegengewirkt wird. Der Vorteil dieser Strategie liegt in der kontinuierlichen Verwendung dieser "Prüfimpulse" (leichter Druckanstieg über das Einlassventil) im Stillstand des Fahrzeugs oder während der Fahrt. Mit dieser Lösung ist der Diagnosedeckungsgrad noch höher und Fehler werden bereits vor einer Bremsung erkannt. Bei dieser Art der Überprüfung ist es weiterhin vorteilhaft, wenn der Ist-Drucksensor in der Nähe der Quelle angeordnet ist, an welcher der Druck erzeugt wird. Auf diese Weise kann verhindert werden, dass der Sensor die Wirkung des kurzen Impulses nicht wahrnimmt. In diesem Sinne ist gemäß einer Ausführungsform vorgesehen, dass der Ist-Drucksensor benachbart zu dem Einlassventil angeordnet ist.

Gemäß einem zweiten Aspekt der Erfindung wird ein Kraftfahrzeug bereitgestellt. Das Kraftfahrzeug umfasst ein Kraftfahrzeug-Bremssystem mit einer elektronischen Steuerungseinheit. Das Kraftfahrzeug-Bremssystem ist dazu eingerichtet, in einem elektronischen Bremsmodus betrieben zu werden, wobei das Kraftfahrzeug-Bremssystem einem Anhänger, der mit dem Kraftfahrzeug verbundenen ist, einen insbesondere pneumatischen oder hydraulischen Bremsdruck bereitstellt, sodass ein Anhänger-Bremssystem des Anhängers mittels des Bremsdrucks betätigt werden kann. Die elektronische Steuerungseinheit ist dazu eingerichtet, insbesondere die Verfahrensschritte (400) bis (600) gemäß einem Verfahren nach dem ersten Aspekt der Erfindung auszuführen. Bei dem Kraftfahrzeug handelt es sich insbesondere um ein Off-Highway-Fahrzeug. Unter einem Off-Highway-Fahrzeug kann ein zumindest überwiegend abseits von Straßen betreibbares Fahrzeug verstanden werden. Bei dem Fahrzeug kann es sich grundsätzlich um jedes nicht schienengebundene Fahrzeug handeln. Es kann sich um ein Gelenkfahrzeug beziehungsweise um ein knickgelenktes Fahrzeug handeln. Das Fahrzeug kann einen Anhänger aufweisen. Beispielsweise kann ein derartiges Fahrzeug mit Anhänger als Fahrzeuggespann, Lastzug oder Sattelzug ausgebildet sein. Bei dem Fahrzeuggespann kann es sich beispielsweise um eine Landwirtschaftsmaschine (Traktor) mit einem Anhänger handeln. Das Fahrzeug kann weiterhin ein Muldenkipper, ein Schlepper, oder ein Lastkraftwagen sein.

Im Folgenden werden Ausführungsbeispiele der Erfindung anhand der schematischen Zeichnung näher erläutert, wobei gleiche oder ähnliche Elemente mit dem gleichen Bezugszeichen versehen sind. Hierbei zeigt
- Fig. 1: ein Kraftfahrzeug, an das ein Anhänger gekuppelt ist,
- Fig. 2: Details eines Kraftfahrzeug-Bremssystems für das Kraftfahrzeug nach Fig. 1,
- Fig. 3: ein Druck/Zeit-Diagramm mit einem über der Zeit ansteigenden Ausgabedruck des Kraftfahrzeug-Bremssystems nach Fig. 2,
- Fig. 4: ein Arbeitsablauf-Diagramm eines Ausführungsbeispiels eines erfindungsgemäßen Verfahrens zur Überprüfung eines Ist-Drucksensors des Kraftfahrzeug-Bremssystems nach Fig. 2,
- Fig. 5: ein Balkendiagramm mit Öffnungszeiten eines Einlassventils des Kraftfahrzeug-Bremssystems nach Fig. 2 zur Erhöhung von dessen Ausgabedruck und
- Fig. 6: ein Druck/Zeit-Diagramm mit einem aufgrund der Öffnungszeiten des Einlassventils nach Fig. 5 über der Zeit ansteigenden Ausgabedruck des Kraftfahrzeug-Bremssystems nach Fig. 2.

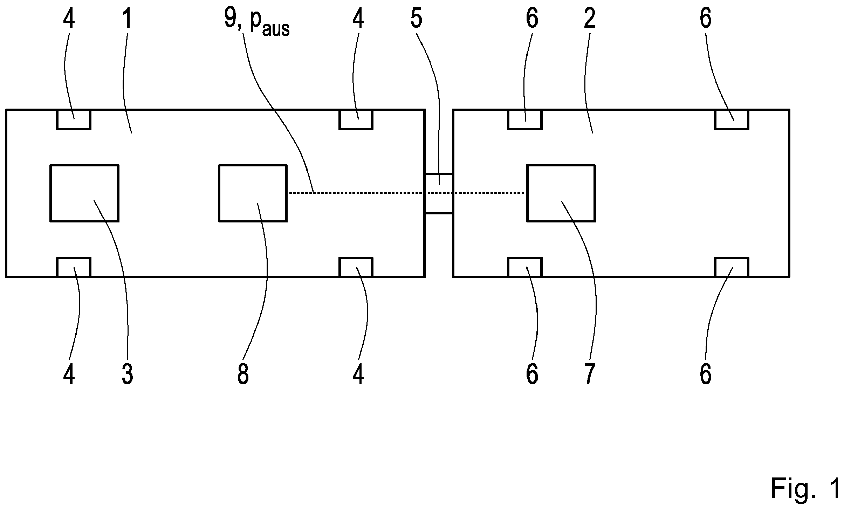

Fig. 1 zeigt ein Kraftfahrzeug 1 und einen Anhänger 2. Bei dem Kraftfahrzeug 1 handelt es sich beispielsweise um ein landwirtschaftliches Nutzfahrzeug, insbesondere um einen Traktor. Das Kraftfahrzeug 1 weist einen Motor 3 zum Antrieb von Rädern 4 des Kraftfahrzeugs 1 auf. Der Anhänger 2 weist keinen Motor auf. Das Kraftfahrzeug 1 weist weiterhin eine Anhängerkupplung 5 auf, mittels welcher das Kraftfahrzeug 1 und der Anhänger 2 mechanisch miteinander gekuppelt sind, sodass das Kraftfahrzeug 1 den Anhänger 2 insbesondere ziehen kann. Der Anhänger 2 rollt in dem gezeigten Ausführungsbeispiel auf vier Rädern 6 (oder Radpaaren). Wenigstens eines dieser Räder 6 kann durch ein Anhänger-Bremssystem 7 des Anhängers 2 abgebremst und zum Stillstand gebracht werden.

Das Kraftfahrzeug 1 weist ein Kraftfahrzeug-Bremssystem 8 auf. Das Kraftfahrzeug-Bremssystem 8 ist mit dem Anhänger-Bremssystem 7 über eine Druckluftleitung 9 ("Anhängersteuerleitung") verbunden. Unter dem Merkmal "verbunden" ist insbesondere zu verstehen, dass die jeweils miteinander verbundenen Elemente pneumatisch leitend miteinander verbunden sind, d.h. dass ein pneumatisches Druckmittel, insbesondere Druckluft, von dem einen Element unter Druck bereitgestellt und auf das andere Element bzw. in dem anderen Element wirken kann. In dem gezeigten Ausführungsbeispiel erzeugt das Kraftfahrzeug-Bremssystem 8 einen pneumatischen Bremsdruck pₐᵤₛ, der über die Druckluftleitung 9 auf das Anhänger-Bremssystem 7 übertragen wird, welches den pneumatischen Bremsdruck pₐᵤₛ nutzt, um die Räder 6 abzubremsen. Die Druckluftleitung 9 dient somit der Drucksteuerung des Anhänger-Bremssystems 7 und kann daher auch als Anhänger-Steuerungsleitung bezeichnet werden.

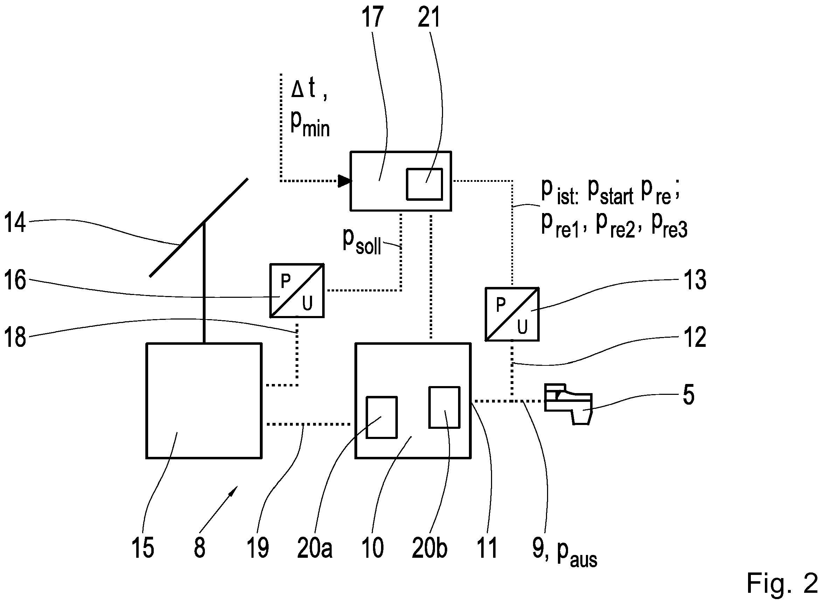

Fig. 2 zeigt einige Details des Kraftfahrzeug-Bremssystems 8 nach Fig. 1. So weist das Kraftfahrzeug-Bremssystem 8 ein elektro-pneumatisches Anhängersteuerventil 10 auf (im Englischen: electronic Trailer Control Valve eTCV). Ein Druckausgang 11 des Anhängersteuerventils 10 ist mit der Druckluftleitung 9 verbunden. An dem Druckausgang 11 liegt der pneumatische Bremsdruck pₐᵤₛ an, der einem eingestellten Druckniveau des Kraftfahrzeug-Bremssystems 8 entspricht. Von der Druckluftleitung 9 zweigt eine Messleitung 12 ab, die zu einem Ist-Drucksensor 13 führt. Weiterhin weist das Kraftfahrzeug-Bremssystem 8 in dem gezeigten Ausführungsbeispiel ein Fußpedal 14, ein Fußbremsventil 15 (im Englischen: Foot Brake Valve FBV), einen Anforderungs-Drucksensor 16 und eine elektronische Steuerungseinheit 17 (Im Englischen: Electronic Control Unit ECU) auf.

Ein nicht dargestellter Fahrer des Kraftfahrzeugs 1 kann mit seinem Fuß das Fußpedal 14 betätigen, das mit dem Fußbremsventil 15 verbunden ist. Das Fußbremsventil 15 erzeugt in Abhängigkeit einer Intensität der Betätigung des Fußpedals 14 einen Steuerdruck für das Kraftfahrzeug-Bremssystem 8. Das Kraftfahrzeug-Bremssystem 8 umfasst in dem gezeigten Ausführungsbeispiel zwei unabhängige Steuerkreise 18 und 19. Alternativ kann lediglich ein Steuerkreis vorgesehen sein, der dann mit dem Anhängersteuerventil 10 und dem Bedarfsdrucksensor 16 verbunden ist.

Der Bedarfsdrucksensor 16 übermittelt elektronisch den Wert eines gewünschten Betriebsbremsdrucks pₛₒₗₗ (Soll-Wert des pneumatischen Bremsdrucks pₐᵤₛ), der von dem Fahrer über das Fußpedal 14 angefordert wird, an die elektronische Steuerungseinheit 17. Die elektronische Steuerungseinheit 17 regelt basierend auf dem gewünschten Betriebsbremsdruck pₛₒₗₗ und von dem Ist-Drucksensor 13 gemessenen Ist-Bremsdruckwerten (pᵢₛₜ) den Ausgangsdruck pₐᵤₛ des elektronisch gesteuerten Anhängersteuerventils 10. Dazu kann das mit dem Ist-Drucksensor 13 in einem geschlossenen Regelkreis wirkende Anhängersteuerventil 10 ein Einlassventil 20a und ein Auslassventil 20b aufweisen. Der mittels des Ist-Drucksensors 13 gemessene Ist-Bremsdruckwert pᵢₛₜ wird elektronisch an die elektronische Steuerungseinheit 17 übermittelt. Somit kann die die elektronische Steuerungseinheit 17 auf den von dem Ist-Drucksensor 13 gemessenen Ist-Bremsdruckwert pᵢₛₜ und auf den von dem Bedarfs-Drucksensor 16 gemessenen gewünschten Betriebsbremsdrucks pₛₒₗₗ zugreifen. Der über den Ist-Drucksensor 13 erfasste Ist-Bremsdruckwert pᵢₛₜ kann dabei über ein in der elektronischen Steuerungseinheit 17 hinterlegtes Bremskennfeld 21 mit dem gewünschten Betriebsbremsdruck pₛₒₗₗ verknüpft sein.

Das Kraftfahrzeug-Bremssystem 8 kann in einem elektronischen Bremsmodus betrieben werden, gemäß welchem ein von dem Fahrer gewünschter Betriebsbremsdruck pₛₒₗₗ automatisch eingeregelt wird, sodass sich der Ausgangsdruck pₐᵤₛ in der Druckluftleitung 9 einstellt. Dabei muss der Fahrer nicht in die Regelung eingreifen. Der über den Ist-Drucksensor 13 erfasste Ist-Bremsdruckwert pᵢₛₜ entspricht dabei normalerweise dem Ausgangsdruck pₐᵤₛ. In seltenen Fällen kann es jedoch vorkommen, dass der Ist-Drucksensor 13 einen Ist-Druckwert von 0 bar misst und/oder an die elektronische Steuerungseinheit 17 übermittelt. Dies kann auf einen Defekt des Ist-Drucksensors 13 selbst oder auf einen Defekt der Verbindung, insbesondere in der Messleitung 12, zwischen dem Ist-Drucksensor 13 und dem Ausgangsdruck pₐᵤₛ zurückzuführen sein.

Dabei können die im Folgenden beschriebenen Fälle unterschieden werden. So kann in einem ersten Fall der gewünschte Betriebsbremsdruck pₛₒₗₗ größer als 1 bar sein. Wenn der Ist-Drucksensor 13 einen Ist- Bremsdruckwert pᵢₛₜ von 0 bar misst und an die elektronische Steuerungseinheit 17 übermittelt, dann ist die Abweichung zwischen dem gewünschten Betriebsbremsdruck pₛₒₗₗ und dem tatsächlich gemessenen Wert größer als 1 bar. In einem solchen Fall können in der elektronischen Steuerungseinheit 17 hinterlegte, bekannte Plausibilitätsprüfungen eine Fehlfunktion erkennen, das Anhängersteuerventil 10 in einen mechanischen Redundanzmodus bringen und den elektronischen Bremsmodus abschalten.

In einem zweiten Fall kann für den pneumatischen Bremsdruck pₐᵤₛ ein Soll-Wert pₛₒₗₗ festgelegt werden, der nicht höher ist als 1 bar. Wenn der Ist-Drucksensor 13 einen Ist- Bremsdruckwert pᵢₛₜ von 0 bar misst und an die elektronische Steuerungseinheit 17 übermittelt, dann ist die Abweichung zwischen dem gewünschten Betriebsbremsdruck pₛₒₗₗ und dem tatsächlich gemessenen Wert kleiner als 1 bar. In diesem Fall ist in aus dem Stand der Technik bekannten Systemen keine Plausibilisierung vorhanden. Problematisch ist nun die natürliche Reaktion der Regelung: Da der gemessene Ist-Bremsdruckwert pᵢₛₜ 0 bar beträgt, versucht die elektronische Steuerungseinheit 17 typischerweise über ein Öffnen des Einlassventils 20a des Anhängersteuerventils 10 den Sollwert pₛₒₗₗ zu erreichen. Da der Ist-Drucksensor 13 jedoch ständig 0 bar anzeigt, wird auch das Einlassventil 20a ständig geöffnet. Dies führt zu einem plötzlichen Anstieg des pneumatischen Bremsdrucks pₐᵤₛ in der Anhängersteuerleitung 9 und einer unerwünschten Vollbremsung, obwohl der Solldruck pₛₒₗₗ einen Wert annimmt, der unterhalb von 1 bar liegt.

Um insbesondere eine Lösung für die beschriebene zweite Fallgruppe (pₛₒₗₗ <= 1bar; pᵢₛₜ = 0 bar) bereitzustellen, wird eine Plausibilitätsprüfung durchgeführt, die sich auf einen Defekt des Ist-Drucksensors 13 oder einen Systemdefekt bezieht, der zu einem Ist-Bremsdruckwert pᵢₛₜ = 0 bar an dem Ist-Druckmesser 13 führt. Dabei wird die Plausibilitätsprüfung insbesondere bei jedem Beginn einer Bremsung durchgeführt, die über den elektronischen Anhängerbremsmodus ausgeführt wird. Die Plausibilitätsprüfung soll bestätigen, ob ein minimaler Ausgangsdruck pₘᵢₙ (Grenzwertdruck) am Ist-Drucksensor 13 als Ergebnis mehrerer Betätigungen des Einlassventils 20a innerhalb einer vordefinierten Zeit tₘₐₓ erreicht wird. Wenn der minimale Ausgangsdruck pₘᵢₙ nicht innerhalb der vordefinierten Zeit tₘₐₓ erreicht wird, dann schaltet das Kraftfahrzeug-Bremssystem 8 automatisch die elektronische Anhängerbremssteuerung ab und geht in einen mechanischen Redundanzmodus über, um die oben erwähnte Überbremsung des Anhängers 2 zu vermeiden.

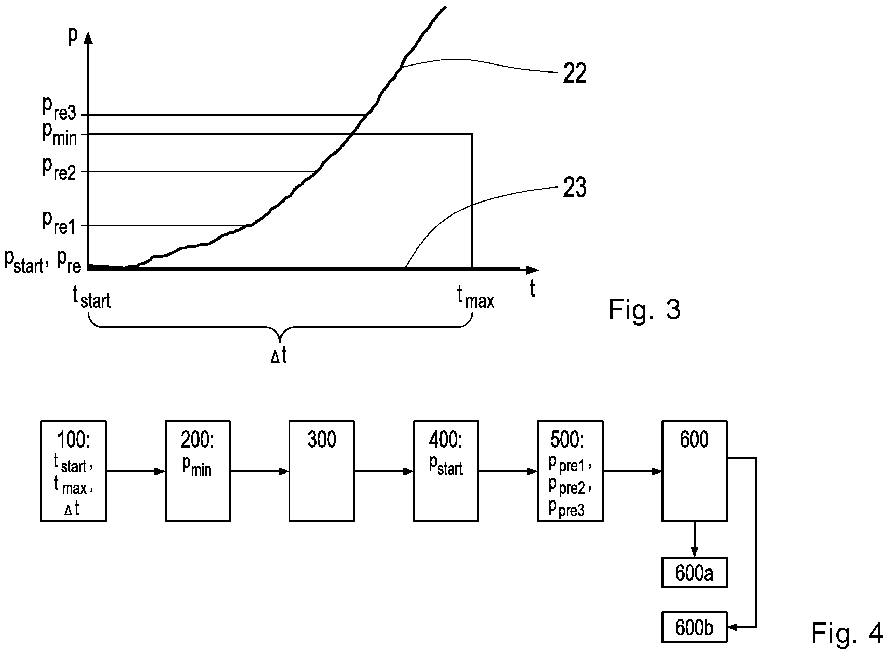

Fig. 3 und 4 zeigen, wie ein entsprechendes Verfahren zur Überprüfung des Ist-Drucksensors 13 des Kraftfahrzeug-Bremssystems 8 ablaufen kann. So kann in einem ersten Verfahrensschritt 100 ein zeitliches Reaktionsintervall Δt festgelegt werden. Beispielsweise kann das zeitliche Reaktionsintervall Δt in einer Speichereinheit der elektronischen Steuerungseinheit 17 hinterlegt werden, z.B. über eine dazu eingerichtete Mensch-Maschine-Schnittstelle. Das Reaktionsintervall Δt ist ein Zeitabschnitt, der zu dem Startzeitpunkt tₛₜₐᵣₜ beginnt, an dem mittels des Kraftfahrzeug-Bremssystems 8 ein Bremsvorgang eingeleitet wird, wobei das Kraftfahrzeug-Bremssystem 8 in seinem elektronischen Bremsmodus betrieben wird. Als Beginn des Bremsvorgangs kann beispielsweise die Betätigung des Fußpedals 14 durch den Fahrer festgelegt werden. Alternativ kann beispielsweise auch das elektronische Übermitteln des gewünschten Betriebsbremsdrucks pₛₒₗₗ durch den Anforderungs-Drucksensor 16 an die elektronische Steuerungseinheit 17 festgelegt werden. Das Reaktionsintervall Δt endet zu einem festgelegten Endzeitpunkt tₘₐₓ, der ebenfalls in dem Schritt 100 festgelegt wird. Somit ergibt sich das Reaktionsintervall Δt aus der Differenz des festgelegten Endzeitpunkts tₘₐₓ und des Startzeitpunkts tₛₜₐᵣₜ (Δt = tₘₐₓ - tₛₜₐᵣₜ). Das Reaktionsintervall tₘₐₓ kann insbesondere einmalig und dauerhaft für eine Vielzahl von Bremsungen festgelegt werden und beispielsweise in der elektronischen Steuerungseinheit 17 gespeichert sein. Bei Bedarf kann der Wert des Reaktionsintervalls Δt geändert werden. Weiterhin kann das Reaktionsintervall Δt mehrere unterschiedliche Werte für unterschiedliche Bremsarten aufweisen. Das Reaktionsintervall Δt muss insbesondere nicht bei jeder Bremsung festgelegt werden.

In einem zweiten Verfahrensschritt 200 kann ein pneumatischer Grenzwertdruck pₘᵢₙ festgelegt werden. Beispielsweise kann der pneumatische Grenzwertdruck pₘᵢₙ in der Speichereinheit der elektronischen Steuerungseinheit 17 hinterlegt werden, z.B. über die dazu vorstehend erwähnte Mensch-Maschine-Schnittstelle. Der zweite Verfahrensschritt 200 kann - wie durch Fig. 4 gezeigt - nach dem ersten Verfahrensschritt 100 durchlaufen werden. Alternativ können der erste Verfahrensschritt 100 und der zweite Verfahrensschritt 200 gleichzeitig ablaufen oder aber der zweite Verfahrensschritt 200 vor dem ersten Verfahrensschritt 100. Die Schwelle für den Grenzwertdruck pₘᵢₙ kann mit einem sehr niedrigen Druckniveau gewählt werden, um den Defekt so früh wie möglich zu erkennen. Der Grenzwertdruck pₘᵢₙ wird dabei nicht höher als der gewünschte Betriebsbremsdruck pₛₒₗₗ gewählt, also insbesondere nicht höher als 1 bar. Ähnlich wie das Reaktionsintervall tₘₐₓ kann auch der Grenzwertdruck pₘᵢₙ insbesondere einmalig und dauerhaft für eine Vielzahl von Bremsungen festgelegt werden und beispielsweise in der elektronischen Steuerungseinheit 17 gespeichert sein. Bei Bedarf kann der Wert des Grenzwertdrucks pₘᵢₙ geändert werden. Weiterhin kann der Grenzwertdruck pₘᵢₙ mehrere unterschiedliche Werte für unterschiedliche Bremsarten aufweisen. Der Grenzwertdruck pₘᵢₙ muss insbesondere nicht bei jeder Bremsung festgelegt werden.

In einem dritten Verfahrensschritt 300 wird das Kraftfahrzeug-Bremssystem 8 wie weiter oben beschrieben in dem elektronischen Bremsmodus betrieben, wobei das Kraftfahrzeug-Bremssystem 8 dem Anhänger 2, der mit dem Kraftfahrzeug 1 verbundenen ist, den pneumatischen Bremsdruck pₐᵤₛ bereitstellt, sodass das Anhänger-Bremssystem 7 mittels des pneumatischen Bremsdrucks pₐᵤₛ betätigt werden kann bzw. sodass das Anhänger-Bremssystem 7 zu deren Betätigung den pneumatischen Bremsdruck pₐᵤₛ verwenden kann.

Wenn der Fahrer des Kraftfahrzeugs 1 durch das Betätigen des Fußpedals 14 eine Bremsung auslöst, dann übermittelt der Anforderungs-Drucksensor 16 den entsprechenden gewünschten Betriebsbremsdruck pₛₒₗₗ an die elektronische Steuerungseinheit 17, was als Startzeitpunkt tₛₜₐᵣₜ angesehen werden kann. Der gewünschte Betriebsbremsdruck pₛₒₗₗ nimmt dabei einen Wert an, der unterhalb von 1 bar liegt, z.B. 0,7 bar. Der Grenzwertdruck pₘᵢₙ kann beispielsweise auf einen Wert von 0,2 bar festgelegt worden sein (zweiter Verfahrensschritt 200). Das Reaktionsintervall Δt kann beispielsweise auf eine zeitliche Länge von 150 Millisekunden festgelegt werden. In einem vierten Verfahrensschritt 400 wird dann zu dem Startzeitpunkt tₛₜₐᵣₜ ein pneumatischer Start-Bremsdruck pₛₜₐᵣₜ des Kraftfahrzeug-Bremssystems 8 mittels des Ist-Drucksensors 13 gemessen. Weiterhin kann der Wert des gemessenen pneumatischen Start-Bremsdrucks pₛₜₐᵣₜ an die elektronische Steuerungseinheit 17 elektronisch übermittelt werden. Ferner wird in dem vierten Verfahrensschritt 400 das Reaktionsintervall Δt zu dem Startzeitpunkt tₛₜₐᵣₜ gestartet.

Fig. 3 zeigt durch einen ersten Graphen 22 ("fault free"; fehlerfreie Prüfung, da der Druck pₘᵢₙ vor dem Zeitpunkt tₘₐₓ erreicht wird) den zeitlichen Verlauf des pneumatischen Bremsdrucks pₐᵤₛ, der von dem Ist-Drucksensor 13 gemessen wird. Der erste Graph 22 startet im Nullpunkt des Koordinatensystems und weist einen im Wesentlichen exponentiellen Verlauf auf. Gemäß dem ersten Graphen 22 wird zu dem Startzeitpunkt tₛₜₐᵣₜ der Wert 0 bar als pneumatischer Start-Bremsdruck pₛₜₐᵣₜ gemessen (Verfahrensschritt 400). In diesem Fall soll im Sinne einer Plausibilitätskontrolle überprüft werden, ob der Wert 0 bar plausibel ist, oder ob ein Defekt vorliegt, insbesondere an dem Ist-Drucksensor 13. Zu diesem Zweck werden in einem fünften Verfahrensschritt 500 eine Vielzahl pneumatischer Reaktions-Bremsdrücke innerhalb des Reaktionsintervalls Δt mittels des Ist-Drucksensors 13 gemessen. In Fig. 3 sind rein beispielhaft drei solcher Reaktions-Bremsdrücke pᵣₑ₁, pᵣₑ₂, pᵣₑ₃ markiert. Wenn das Reaktionsintervall Δt beendet ist, also nach dem Zeitpunkt tₘₐₓ, müssen für die Plausibilitätskontrolle keine Reaktions-Bremsdrücke mehr gemessen werden.

In einem sechsten Verfahrensschritt 600 wird überprüft, ob die Reaktions-Bremsdrücke pᵣₑ₁, pᵣₑ₂, pᵣₑ₃ den minimalen pneumatischen Druck pₘᵢₙ überschreiten. In dem Beispiel nach Fig. 3 verläuft der gemessene Ist-Bremsdruckwert pᵢₛₜ derart, dass ein erster Reaktions-Bremsdruck pᵣₑ₁ und ein zweiter Reaktions-Bremsdruck pᵣₑ₂ Werte unterhalb des minimalen pneumatischen Drucks pₘᵢₙ annehmen.

Der erste Reaktions-Bremsdruck pᵣₑ₁ ist dabei höher als der pneumatischer Start-Bremsdruck pₛₜₐᵣₜ (0 bar). Die elektronische Steuerungseinheit 17 hatte zuvor den von dem Ist-Drucksensor 13 gemessenen und an die elektronische Steuerungseinheit 17 übermittelten Wert (0 bar) des pneumatischen Bremsdruck pₐᵤₛ mit dem gewünschten Betriebsbremsdruck pₛₒₗₗ = 0,7 bar verglichen. Um den pneumatischen Bremsdruck pₐᵤₛ auf den gewünschten Betriebsbremsdruck pₛₒₗₗ anzuheben, hat die elektronische Steuerungseinheit 17 das Anhängersteuerventil 10 angewiesen, sein Einlassventil 20a in einen geöffneten Zustand zu versetzen. Durch das Öffnen des Einlassventils 20a hat sich gemäß dem ersten Graphen 22 der pneumatische Bremsdruck pₐᵤₛ derart erhöht, dass der gemessene erste Reaktions-Bremsdruck pᵣₑ₁ höher ist als der pneumatische Start-Bremsdruck pₛₜₐᵣₜ (0 bar). Den minimalen pneumatischen Druck pₘᵢₙ überschreitet der erste Reaktions-Bremsdruck pᵣₑ₁ jedoch nicht.

Der zweite Reaktions-Bremsdruck pᵣₑ₂ ist gemäß dem ersten Graphen 22 höher als der erste Reaktions-Bremsdruck pᵣₑ₁. Die elektronische Steuerungseinheit 17 hatte zuvor den von dem Ist-Drucksensor 13 gemessenen und an die elektronische Steuerungseinheit 17 übermittelten Wert des ersten Reaktions-Bremsdrucks pᵣₑ₁ mit dem gewünschten Betriebsbremsdruck pₛₒₗₗ = 0,7 bar verglichen, der noch nicht erreicht wurde. Um den pneumatischen Bremsdruck pₐᵤₛ auf den gewünschten Betriebsbremsdruck pₛₒₗₗ anzuheben, hat die elektronische Steuerungseinheit 17 das Anhängersteuerventil 10 angewiesen, sein Einlassventil 20a in den geöffneten Zustand zu versetzen oder in dem geöffneten Zustand zu belassen. Durch das Öffnen des Einlassventils 20a hat sich gemäß dem ersten Graphen 22 der pneumatische Bremsdruck pₐᵤₛ derart erhöht, dass der gemessene zweite Reaktions-Bremsdruck pᵣₑ₂ höher ist als der erste Reaktions-Bremsdruck pᵣₑ₁. Den minimalen pneumatischen Druck pₘᵢₙ überschreitet der zweite Reaktions-Bremsdruck pᵣₑ₂ jedoch nicht.

Der innerhalb des Reaktionsintervalls Δt liegende, dritte Reaktions-Bremsdruck pᵣₑ₃ nimmt jedoch einen Wert an, der den minimalen pneumatischen Druck pₘᵢₙ überschreitet. Die elektronische Steuerungseinheit 17 hatte zuvor den von dem Ist-Drucksensor 13 gemessenen und an die elektronische Steuerungseinheit 17 übermittelten Wert des zweiten Reaktions-Bremsdrucks pᵣₑ₂ mit dem gewünschten Betriebsbremsdruck pₛₒₗₗ = 0,7 bar verglichen, der noch nicht erreicht wurde. Um den pneumatischen Bremsdruck pₐᵤₛ auf den gewünschten Betriebsbremsdruck pₛₒₗₗ anzuheben, hat die elektronische Steuerungseinheit 17 das Anhängersteuerventil 10 angewiesen, sein Einlassventil 20a in den geöffneten Zustand zu versetzen oder in dem geöffneten Zustand zu belassen. Durch das Öffnen des Einlassventils 20a hat sich gemäß dem ersten Graphen 22 der pneumatische Bremsdruck pₐᵤₛ derart erhöht, dass der gemessene dritte Reaktions-Bremsdruck pᵣₑ₃ nunmehr höher ist als der minimale pneumatische Druck pₘᵢₙ. Somit ergibt die Überprüfung in dem Verfahrensschritt 600, dass zumindest ein gemessener Reaktions-Bremsdruck, nämlich der dritte gemessene Reaktions-Bremsdruck pᵣₑ₃, den minimalen pneumatischen Druck pₘᵢₙ überschreitet. Basierend darauf kann darauf geschlossen werden, dass der Ist-Drucksensor 13 den Wert 0 bar für den pneumatischer Start-Bremsdruck pₛₜₐᵣₜ korrekt gemessen hat und keinen Defekt aufweist. Folglich wird der Betrieb des Kraftfahrzeug-Bremssystems 8 gemäß einem Verfahrensschritt 600a in dem elektronischen Betriebsmodus fortgeführt (Alternative 1).

Fig. 3 zeigt durch einen zweiten Graphen 23 ("stuck at zero"; der Ist-Drucksensor 13 zeigt dauerhaft 0 bar an und die Systemprüfung schlägt fehl, da pₘᵢₙ nicht erreicht wird, insbesondere nicht vor dem Zeitpunkt tₘₐₓ) einen alternativen zeitlichen Verlauf des pneumatischen Bremsdrucks pₐᵤₛ, der von dem Ist-Drucksensor 13 gemessen wird. Der zweite Graph 23 startet im Nullpunkt des Koordinatensystems und weist einen horizontalen Verlauf auf. Gemäß dem zweiten Graphen 23 wird somit zu dem Startzeitpunkt tₛₜₐᵣₜ der Wert 0 bar als pneumatischer Start-Bremsdruck pₛₜₐᵣₜ gemessen (Verfahrensschritt 400). In diesem Fall soll im Sinne einer Plausibilitätskontrolle überprüft werden, ob der Wert 0 bar plausibel ist, oder ob ein Defekt vorliegt, insbesondere an dem Ist-Drucksensor 13. Zu diesem Zweck werden in dem fünften Verfahrensschritt 500 eine Vielzahl pneumatischer Reaktions-Bremsdrücke pᵣₑ innerhalb des Reaktionsintervalls Δt mittels des Ist-Drucksensors 13 gemessen. Der zweite Graph 23 verläuft derart horizontal, dass alle gemessenen Reaktions-Bremsdrücke pᵣₑ den Wert 0 annehmen. Das heißt, dass der Ist-Drucksensor 13 kontinuierlich einen pneumatischen Bremsdruck pₐᵤₛ von 0 bar misst. Wenn das Reaktionsintervall Δt beendet ist, also nach dem Zeitpunkt tₘₐₓ, müssen für die Plausibilitätskontrolle keine Reaktions-Bremsdrücke mehr gemessen werden.

In dem sechsten Verfahrensschritt 600 wird überprüft, ob die Reaktions-Bremsdrücke pᵣₑ den minimalen pneumatischen Druck pₘᵢₙ überschreiten. Da keiner der Reaktions-Bremsdrücke pᵣₑ über den Wert 0 bar hinausgeht, ergibt die Überprüfung, dass keiner der gemessenen Reaktions-Bremsdrücke pᵣₑ den minimalen pneumatischen Druck pₘᵢₙ überschreitet. Basierend darauf kann darauf geschlossen werden, dass der Ist-Drucksensor 13 den Wert 0 bar für den pneumatischer Start-Bremsdruck pₛₜₐᵣₜ nicht korrekt gemessen hat und einen Defekt aufweist. Folglich wird der Betrieb des Kraftfahrzeug-Bremssystems 8 gemäß einem Verfahrensschritt 600b in dem elektronischen Betriebsmodus abgebrochen (2. Alternative). Stattdessen kann das Kraftfahrzeug-Bremssystems 8 ab diesem Zeitpunkt an beispielsweise in dem bereits oben erwähnten mechanischen Redundanzmodus betrieben werden.

Für die vorstehend beschriebene Art der Prüfung können besondere Voraussetzungen und Einstellungen der Druckregelung erforderlich sein. Bei einem gewünschten Betriebsbremsdruck pₛₒₗₗ von z.B. 0,5 bar erhöht die Regelung "vorsichtig" den Druck auf den gewünschten Wert pₛₒₗₗ und es wird versucht, diesen Sollwert pₛₒₗₗ nicht zu überschreiten. Das würde normalerweise dazu führen, dass der minimale pneumatische Druck pₘᵢₙ nicht innerhalb des Reaktionsintervalls Δt überschreiten wird und der Test fehlschlägt, da die Regelung zu langsam ist. Daher wird die Druckregelung derart eingestellt, dass die anfänglichen Öffnungsimpulse des Einlassventils 20a des Anhängersteuerventils 10 künstlich verlängert werden, um die Reaktionsdrücke zu zwingen, einen bestimmten Wert, insbesondere den pneumatischen Grenzwertdruck pₘᵢₙ, schneller zu erreichen.

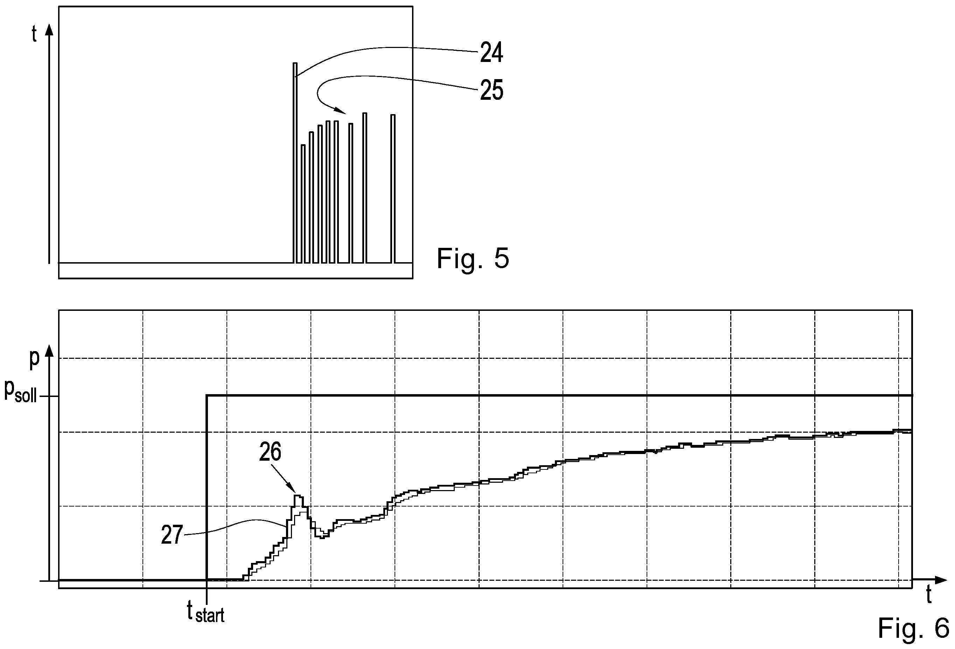

Fig. 5 zeigt, dass ein erster Einlassventilimpuls 24 zeitlich länger wirkt als die darauffolgenden Einlassventilimpulse 25, die nicht geändert werden. Dazu kann das Einlassventil 20a, wenn es bei dem ersten Impuls 24 das erste Mal innerhalb des Reaktionsintervalls Δt in den geöffneten Zustand versetzt wird, für einen längeren Zeitraum geöffnet bleiben als bei den zeitlich darauffolgenden Impulsen 25 (acht in dem gezeigten Ausführungsbeispiel) und entsprechend darauffolgenden Öffnungszeiten. Die elektronische Steuerungseinheit 17 kann das Anhängersteuerventil 10 dazu entsprechend anweisen. Dies führt zu einer sehr kleinen Spitze 26 in dem durch einen dritten Graphen 27 dargestellten zeitlichen Verlauf des pneumatischen Bremsdrucks pₐᵤₛ. Fig. 6 zeigt, dass der erste Impuls 24 innerhalb des Reaktionsintervalls Δt zu einer sehr kleinen Druckspitze 26 gleich zu Beginn des Druckanstiegs führt. Diese Spitze 26 ist klein genug, um nicht über den gewünschter Betriebsbremsdruck pₛₒₗₗ hinauszuschießen. Stattdessen signalisiert die Druckspitze der Steuergerätesoftware innerhalb des Reaktionsintervalls Δt, dass der Ist-Drucksensor nicht bei 0 bar hängen bleibt, sondern in der Lage ist, richtige Werte zu liefern.

Weiterhin ist es möglich, den Diagnoseumfang noch zu erhöhen. Die oben beschriebene Plausibilisierung wird während einer Bremsanforderung des Fahrers durchgeführt. Dies führt zu einem hohen Diagnosedeckungsgrad, erkennt aber eine System-oder Sensorfehlfunktion erst zu Beginn des Bremsvorgangs. Um den Fahrer auf eine verminderte Leistung aufmerksam zu machen, kann es hilfreich sein, die korrekte Funktion insbesondere des Ist-Drucksensors 13 bereits vor der Bremsung zu überprüfen. Da die erwähnten Druckspitzen sehr klein sein können (z. B. ~ 100 mbar), ist es möglich, einen einzelnen hohen Einlassventilimpuls auch dann auszulösen, wenn keine Bremsanforderung vorliegt. Dazu kann das Einlassventil 20a ein einziges Mal in den geöffneten Zustand versetzt wird, während kein Bremsvorgang durchgeführt wird. Auf diese Weise wird eine weitere, nicht dargestellte Druckspitze in dem zeitlichen Verlauf des pneumatischen Bremsdrucks erzeugt, während kein Bremsvorgang durchgeführt wird. Auf den Einlassventilimpuls kann insbesondere ein Auslassventilimpuls folgen, sodass dieser kurze Druckanstieg keinerlei Auswirkung auf den Bremsdruck pₐᵤₛ des Anhängers 2 hat, aber es dennoch möglich ist, einen Wert am Ist-Drucksensor 13 zu sehen. In diesem Fall kann der Ist-Drucksensor 13 als "OK" markiert werden und das System 8 bleibt im Normalbetrieb. Dazu kann das Einlassventil 20a in einen geschlossenen Zustand versetzt werden, nachdem es zuvor ein einziges Mal in den geöffneten Zustand versetzt worden ist. Anschließend, insbesondere in zeitlich sehr kurzem Abstand danach, kann das Auslassventil 20b ein einziges Mal in einen geöffneten Zustand versetzt werden, während kein Bremsvorgang durchgeführt wird. Auf diese Weise kann der zuvor durch das einmalige Öffnen des Einlassventils 20a erzeugten Druckspitze entgegengewirkt werden.

Bezugszeichen
- pₐᵤₛ: pneumatischer Bremsdruck
- pᵢₛₜ: Ist-Bremsdruckwert
- pₘᵢₙ: pneumatischer Grenzwertdruck
- pᵣₑ: Reaktionsdruck zweiter Graph
- pᵣₑ₁: erster Reaktionsdruck erster Graph
- pᵣₑ₂: zweiter Reaktionsdruck erster Graph
- pᵣₑ₃: dritter Reaktionsdruck erster Graph
- pₛₜₐᵣₜ: pneumatischer Start-Bremsdruck
- pₛₒₗₗ: gewünschter Betriebsbremsdruck

- Δt: Reaktionsintervall
- tₛₜₐᵣₜ: Startzeitpunkt
- tₘₐₓ: Endzeitpunkt

- 1: Kraftfahrzeug
- 2: Anhänger
- 3: Motor
- 4: Rad
- 5: Anhängerkupplung
- 6: Rad
- 7: Anhänger-Bremssystem
- 8: Kraftfahrzeug-Bremssystem
- 9: Druckluftleitung
- 10: Anhängersteuerventil
- 11: Druckausgang
- 12: Messleitung
- 13: Ist-Drucksensor
- 14: Fußpedal
- 15: Fußbremsventil
- 16: Anforderungs-Drucksensor
- 17: elektronische Steuerungseinheit
- 18: erster Steuerkreis
- 19: zweiter Steuerkreis
- 20a: Einlassventil
- 20b: Auslassventil
- 21: Bremskennfeld
- 22: erster Graph
- 23: zweiter Graph
- 24: erster Impuls
- 25: nachfolgende Impulse
- 26: Druckspitze
- 27: dritter Graph

- 100: erster Verfahrensschritt
- 200: zweiter Verfahrensschritt
- 300: dritter Verfahrensschritt
- 400: vierter Verfahrensschritt
- 500: fünfter Verfahrensschritt
- 600: sechster Verfahrensschritt
- 600a: Verfahrensschritt (1. Alternative)
- 600b: Verfahrensschritt (2. Alternative)

## Patentansprüche

1. Verfahren zur Überprüfung eines Ist-Drucksensors (13) eines Kraftfahrzeug-Bremssystems (8), das Verfahren umfassend die Verfahrensschritte
(100): Festlegen einer zeitlichen Länge eines Reaktionsintervalls (Δt),
(200): Festlegen eines Grenzwertdrucks (pₘᵢₙ),
(300): Betreiben eines Kraftfahrzeug-Bremssystems (8) eines Kraftfahrzeugs (1) in einem elektronischen Bremsmodus, wobei das Kraftfahrzeug-Bremssystem (8) einem Anhänger (2), der mit dem Kraftfahrzeug (1) verbundenen ist, einen Bremsdruck (pₐᵤₛ) bereitstellt, sodass ein Anhänger-Bremssystem (7) des Anhängers (2) mittels des Bremsdrucks (pₐᵤₛ) betätigt werden kann,
(400): Starten des Reaktionsintervalls (Δt) zu Beginn des Bremsvorgangs und Messen pneumatischer Ist-Bremsdruckwerte (pᵢₛₜ) mittels eines Ist-Drucksensors (13), wobei ein Start-Bremsdruck (pₛₜₐᵣₜ) des Kraftfahrzeug-Bremssystems (8) mittels des Ist-Drucksensors (13) zu Beginn eines Bremsvorgangs gemessen wird, der in dem elektronischen Bremsmodus für den Anhänger (2) durchgeführt wird,
(500): Messen pneumatischer Reaktions-Bremsdrücke (pᵣₑ; pᵣₑ₁, pᵣₑ₂, pᵣₑ₃) innerhalb des Reaktionsintervalls (Δt) mittels des Ist-Drucksensors (13),
(600): Überprüfen, ob die Reaktions-Bremsdrücke (pᵣₑ; pᵣₑ₁, pᵣₑ₂, pᵣₑ₃) den Grenzwertdruck (pₘᵢₙ) überschreiten, wobei
(600a) der Betrieb des Kraftfahrzeug-Bremssystems (8) in dem elektronischen Betriebsmodus fortgeführt wird, wenn zumindest ein gemessener Reaktions-Bremsdruck (pᵣₑ₃) den Grenzwertdruck (pₘᵢₙ) überschreitet, und
(600b) der Betrieb des Kraftfahrzeug-Bremssystems (8) in dem elektronischen Betriebsmodus abgebrochen wird, wenn keiner der gemessenen Reaktions-Bremsdrücke (pᵣₑ) den Grenzwertdruck (pₘᵢₙ) überschreitet.

2. Verfahren nach Anspruch 1, wobei die Verfahrensschritte (400) bis (600) bei jedem Bremsvorgang durchgeführt werden, der initiiert wird, wenn das Kraftfahrzeug-Bremssystem (8) in dem elektronischen Bremsmodus betrieben wird.

3. Verfahren nach Anspruch 1, wobei die Verfahrensschritte (500) und (600) nur dann durchgeführt werden, wenn in dem Verfahrensschritt (400) der Wert 0 bar als Start-Bremsdruck (pₛₜₐᵣₜ) gemessen wird.

4. Verfahren nach einem der vorstehenden Ansprüche, wobei
- für den Bremsdruck (pₐᵤₛ) ein Soll-Wert (pₛₒₗₗ) festgelegt wird, der nicht höher ist als 1 bar, und
- der Bremsdruck (pₐᵤₛ) basierend auf dem festgelegten Soll-Wert (pₛₒₗₗ) für den Bremsdruck (pₐᵤₛ) und basierend auf den von dem Ist-Drucksensor (13) gemessenen Ist-Bremsdruckwerten (pᵢₛₜ) geregelt wird.

5. Verfahren nach Anspruch 4, wobei der Grenzwertdruck (pₘᵢₙ) auf einen Wert festgelegt wird, der zwischen 0 bar und dem Soll-Wert (pₛₒₗₗ) des Bremsdrucks (pₐᵤₛ) liegt.

6. Verfahren nach einem der vorstehenden Ansprüche, wobei das Reaktionsintervall (Δt) auf eine zeitliche Länge von 50 Millisekunden bis 300 Millisekunden festgelegt wird.

7. Verfahren nach einem der vorstehenden Ansprüche, wobei
- das Kraftfahrzeug (1) ein Anhängersteuerventil (10) mit einem Einlassventil (20a) aufweist, und
- das Einlassventil (20a) innerhalb des Reaktionsintervalls (Δt) wenigstens einmal in einen geöffneten Zustand versetzt wird, um den Bremsdruck (pₐᵤₛ) des Kraftfahrzeug-Bremssystems (8) derart zu erhöhen, dass die gemessenen Reaktions-Bremsdrücke (pᵣₑ₃) den Grenzwertdruck (pₘᵢₙ) überschreiten.

8. Verfahren nach Anspruch 7, wobei
- das Einlassventil (20a) innerhalb des Reaktionsintervalls (Δt) mehrmals in einen geöffneten Zustand versetzt wird, und
- das Einlassventil (20a), wenn es das erste Mal in den geöffneten Zustand versetzt wird, für einen längeren Zeitraum geöffnet bleibt, als wenn es nach dem ersten Mal erneut in den geöffneten Zustand versetzt wird.

9. Verfahren nach Anspruch 7 oder 8, wobei das Einlassventil (20a) einmal in den geöffneten Zustand versetzt wird, während kein Bremsvorgang durchgeführt wird, sodass eine Druckspitze (26) in dem zeitlichen Verlauf (27) des Bremsdrucks (pₐᵤₛ) auftritt, während kein Bremsvorgang durchgeführt wird.

10. Verfahren nach Anspruch 9, wobei
- das Anhängersteuerventil (10) ein Auslassventil (20b) aufweist, und
- das Einlassventil (20a) in einen geschlossenen Zustand versetzt wird, nachdem es zuvor einmal in den geöffneten Zustand versetzt worden ist, und das Auslassventil (20b) anschließend einmal in einen geöffneten Zustand versetzt wird, während kein Bremsvorgang durchgeführt wird, sodass der Druckspitze (26) entgegengewirkt wird.

11. Kraftfahrzeug (1) umfassend ein Kraftfahrzeug-Bremssystem (8) mit einer elektronischen Steuerungseinheit (17), wobei
- das Kraftfahrzeug-Bremssystem (8) dazu eingerichtet ist, in einem elektronischen Bremsmodus betrieben zu werden, wobei das Kraftfahrzeug-Bremssystem (8) einem Anhänger (2), der mit dem Kraftfahrzeug (1) verbundenen ist, einen Bremsdruck bereitstellt, sodass ein Anhänger-Bremssystem (7) des Anhängers (2) mittels des Bremsdrucks betätigt werden kann, und
- die elektronische Steuerungseinheit (17) dazu eingerichtet ist, die Verfahrensschritte (400) bis (600) gemäß einem Verfahren nach einem der vorstehenden Ansprüche auszuführen.
